# EUROPEAN PATENT APPLICATION

(11) **EP 1 876 559 A1**
(43) Date of publication of application: **09.01.2008**
(21) Application number: 06291107.8
(22) Date of filing: 03.07.2006
(51) Int. Cl.: G06Q 20/00, G07F 7/08

(54) **IC card parameters selection**

(71) Applicant: Axalto SA, 92190 Meudon (FR)
(72) Inventor: Mezger, Philippe, 92190 Meudon (FR)

(57) **Abstract**

The invention relates to an IC card (100, 200) comprising at least two credit parameters records (111, 131, 132, 133, 134). Each credit parameters record comprises at least one credit parameter. The IC card (100, 200) is set to display at least two credit parameters belonging to at least two distinct credit parameters records (111, 131, 132, 133, 134), and to select a credit parameters record comprising one of the displayed credit parameters. The invention also relates to a system comprising an IC card (100, 200) and a terminal, and to a method for performing a credit transaction with an IC card (100, 200).

## Description

The invention relates to IC cards for performing credit transactions, in particular EMV credit cards. The invention also relates to a system comprising an IC card and a terminal for performing credit transactions, and to a method for performing credit transactions.

IC cards credit transactions typically involve four entities:
- a cardholder (e.g. person willing to buy a piece of furniture)
- a merchant (e.g. a store selling furniture)
- an issuer (typically the bank of the cardholder)
- an acquirer (typically the bank of the merchant)

The issuer typically wishes to provide as many services as possible to the cardholder. The issuer typically has a network of terminals. Such terminals may include ATMs (automatic teller machines) allowing cardholders to withdraw cash with their card. The issuer can also be an acquirer, in which case his terminals may include POS terminals (point of sale terminals) which merchants use for credit cards payments.

However, in general, when a cardholder goes to a merchant, the issuer and the acquirer are not the same. In simpler terms, the bank of the cardholder is typically different from the bank of the merchant. Therefore the issuer has typically no control over the terminals used by the cardholder in order to perform transactions such as credit transactions.

As well known in the art and explained in particular in Wikipedia, an online encyclopedia, a credit card system is a type of transaction settlement and credit system, named after the small plastic card issued to users of the system (referred to as cardholders). A credit card is different from a debit card in that the credit card issuer lends the consumer money rather than having the money removed from an account. It is also different from a charge card (though this name is sometimes used by the public to describe credit cards) in that charge cards require that the balance be paid in full each month. In contrast, a credit card allows the consumer to 'revolve' their balance, at the cost of having interest charged. Most credit cards are the same shape and size, as specified by the ISO 7810 standard. However, alternative shapes exist.

Typically, a user is issued a credit card after an account has been approved by the credit provider (often a general bank, but sometimes a captive bank created to issue a particular brand of credit card). The cardholder can make purchases from merchants accepting that credit card up to a pre-established credit limit. When a purchase is made, the cardholder agrees to pay the card issuer. The cardholder may indicate his/her consent to pay in multiple ways, such as by signing a receipt with a record of the card details and indicating the amount to be paid, by giving verbal authorizations via telephone and electronic authorization using the Internet, etc.

In general, the cardholder receives a monthly statement indicating the purchases undertaken with the card, and the total amount owed. The cardholder then pays a minimum proportion of the bill by a due date, or may choose to pay the entire amount owed or more. The credit provider charges interest on the amount owed (typically at a much higher rate than most other forms of debt). Some financial institutions can arrange for automatic payments to be deducted from the cardholder's accounts. Credit card issuers usually waive interest charges if the balance is paid in full each month, but typically will charge full interest on the entire outstanding balance from the date of each purchase if the total balance is not paid. For example, if a cardholder had a $1,000 outstanding balance for purchases and pays the entire $1,000 there would be no interest charged. If, however, even $1.00 of the total balance remained unpaid, interest would typically be charged on the full $1,000 from the date of purchase until the payment is received. The precise manner in which interest is charged is usually detailed in a cardholder agreement which may be summarized on the back of the monthly statement.

The credit card may serve as a form of revolving credit, or the cardholder may choose to apply any payments toward recent rather than previous debt. Interest rates can vary considerably from card to card, and the interest rate on a particular card may jump dramatically if the cardholder is late with a payment on that card or any other credit instrument. As the rates and terms vary, services have been set up allowing cardholders to calculate savings available by switching cards, which can be considerable if there is a large outstanding balance. Given that the credit card industry is in general extremely competitive, credit providers often offer incentives such as frequent flier miles, gift certificates, or cash back (typically 1 percent) to try to attract customers to their program. Low interest credit cards or even 0% interest credit cards are available. The main downside to consumers is that the period of low interest credit cards is typically limited to a fixed term, usually between 6 and 12 months. However, services are available which alert cardholders when their low interest period is due to expire. Most such services charge a monthly or annual fee.

As well as convenient, accessible credit, credit cards may offer consumers an easy way to track expenses, which can be helpful both for monitoring personal expenditures and for tracking work-related expenses for taxation and reimbursement purposes. They have now spread worldwide, and are offered in a high variety of permutations with differing credit limits, repayment arrangements such as automatic payment from a personal bank account. Some cards offer interest-free periods, while others do not but compensate with much lower interest rates. They can offer other advantages such as rewards schemes in which points earned by purchasing goods with the card can be redeemed for further goods and services or credit card cash-back.

Customers who do not pay in full the amount owed on their monthly statement (the "balance") by the due date (that is, at the end of the "grace period") typically owe interest ("finance charges"). These customers are known in the industry as "revolvers". Those who pay in full (pay the entire balance) do not. These customers are known in the industry as "transactors" or "deadbeats". Interest charges vary widely from card issuer to card issuer. Often, there are "teaser" rates in effect for initial periods of time (as low as zero percent for, say, six months), whereas rates for those with poor credit can be as much as 29.74 percent (annualized). In the U.S. rules governing interest rates are set at the state level; some banks have chosen to establish their credit card operations in states such as South Dakota that have less restrictive limits on interest rates.

The major fees charged to cardholders are for (1) late payments; (2) charges that result in exceeding the credit limit on the card (whether done deliberately or by mistake); (3) cash advances and convenience checks (often 3 percent of the amount); (4) transactions in a foreign currency (as much as 3 percent of the amount; a few financial institutions charge no fee for this); and (5) membership fees (annual or monthly), sometimes a percentage of the credit limit.

Some credit cards can also be used in an ATM to withdraw money up to the credit limit extended to the card but many card issuers charge interest on cash advances before they do so on purchases. The interest on cash advances is commonly charged from the date the withdrawal is made, rather than the monthly billing date. Many card issuers levy a commission for cash withdrawals, even if the ATM belongs to the same bank as the card issuer. Merchants typically do not offer cash-back on credit card transactions because they would pay a percentage commission of the additional cash amount to their bank or merchant services provider, thereby making it uneconomical.

The competition in the field of credit cards is such that issuers frequently offer multiple credit card products in order to cover different credit profiles associated with each credit card. A cardholder may therefore carry two or more credit cards from a single issuer, in order to benefit from two or more credit profiles which he chooses depending on the credit transaction. When an issuer offers a new credit profile through new credit cards, competing issuers typically also issue new credit cards in order to propose similar or better credit profiles.

GB2386720 discloses a system for managing an activity such as a transaction with a provider of goods or services, including request means to enable a cardholder to make a request to engage in an activity with a first of a plurality of providers; a personal data storage device (e.g. a card with a chip or magnetic stripe), presented by the user to the first provider, the device provided with identification data to identify the user and a user profile comprising a plurality of sets of user profile data, each set of user profile data pertaining to at least one of the plurality of providers; determination means to determine any response to be given to said user upon making said request, wherein the system processes the user's request to engage in the activity and determines the response to be given to said user if possible according to the set of user profile data pertaining to said first provider, and if not possible according to the user profile data pertaining to said first provider and one or more sets of user profile data pertaining to one or more other providers, or only according to one or more sets of user profile data pertaining to one or more other providers.

GB2386720 discloses the use of a single terminal both for the management of the profiles in the card and for the management of the transaction, as seen in particular on page 31 lines 28 to 35.

GB2386720 discloses in particular page 49 lines 22 to 37 that a smart card can contain multiple profiles and that the profiles can be used in order to perform credit rating, i.e. based on information such as late payments or past business activities, a different credit rate could be granted to the user.

The EMV standard specifies interactions between the issuer, the acquirer, an EMV IC card and an EMV terminal. EMV version 4.1 defines a transaction as an action taken by a terminal at the cardholder's request. For a POS terminal, a transaction might be payment for goods, etc. A transaction selects among one or more applications as part of its processing flow. According to the EMV 4.1 specification, credit cards may have the ability to provide multiple sets of applications to be supported by a single terminal program. For example, a card may contain multiple credit/debit applications, each representing a different type or level of service or a different account. If multiple applications are supported, the terminal may offer a selection to the cardholder, or make the selection itself. The terminal may select the application without cardholder assistance. In this case, the terminal shall select the highest priority application from the list of mutually supported applications.

EP1475760 discloses a method for executing a transaction by means of a credit card, as well as a credit card, a host system and a transactor terminal for executing such transactions. A location dependent credit line profile of the credit card is stored. The location dependent credit line profile defines the credit line of the credit card dependent on location of transaction. Further, location data of the transaction executed by means of the credit card are determined. The transaction is checked in view of granted local credit line calculated by means of determined location data and the credit line profile of the credit card.

US6372307 discloses a chip card (a.k.a IC card) containing a ferroelectric liquid-crystal display containing a ferroelectric liquid-crystal layer. Such chip cards are commonly referred to as "display cards". According to US6372307, the chip card can be an EMV smart card. It is also known to embed an input device (such as a keypad or a fingerprint scanner, or other) into a display card. IC cards can comprise output devices other than display, for example a buzzer or speaker, etc. Display cards normally comprise an embedded power supply (e.g. battery or solar cell). Indeed, one of the benefits of display cards is to display information without the need for a terminal, and this benefit would be void if one had to connect the display card to a terminal in order to power it. Some display cards do not need a power supply, as they are used solely for security purpose (i.e. what they display on their own display is necessarily trusted, as opposed to what is displayed on an unknown terminal). Such display cards are not common.

A technical problem with a first type of state of the art solutions (single credit IC cards) is the fact that the cardholder needs to carry plenty of cards (one card per type of credit).

A technical problem with a second type of state of the art solutions (multi application IC cards) is as follows. While the cardholder carries a single card with multiple applications, POS terminals where the transaction takes place do not necessarily support the selection of one of many applications by the cardholder at the time a credit transaction is to be executed. POS terminals that do support such selection typically only support the selection of one of many applications based on an identifier displayed to the cardholder, while the identifier does not indicate the characteristics of the credit, or do an automatic selection not involving the cardholder. Such POS terminals are typically not under control of the issuer but under control of the acquirer. In addition, there are many instances in which such selection is not possible, for example a French cardholder traveling abroad typically has no choice but using the credit application which AID is a predefined AID such as an international payment scheme AID.

Therefore, such POS terminal cannot normally by adapted to specific needs of the issuer, and existing multi application IC cards lack flexibility. Existing multi-applications cards are not necessarily usable as multi-applications cards although they contain multiple applications, due to lack of control over the terminals which they rely on.

An IC card according to a preferred embodiment recited in claim 1 comprises at least two credit parameters records. Each credit parameters record is associated with a credit. Each credit parameters record comprises at least one credit parameter. In the context of the invention, the term "credit parameter" is synonymous with "credit characteristic", "credit property", and "credit attribute". Each credit parameters record therefore typically describes a credit offered by the issuer of the IC card by storing the credit parameters / characteristics / attributes / properties. For example, the credit parameters of a credit parameters record may comprise one or more of the following: a credit label (e.g. "summer credit", "furniture credit", etc.), a credit interest rate, a credit start date, a credit expiration date, a credit maximum amount, and a bonus type. Two credit parameters records do not necessarily comprise the same set of credit parameters. For example, one credit parameters record may comprise a bonus type parameter (e.g. Air France miles offered when the credit is used), while another doesn't comprise any bonus type parameter. A credit parameters record may comprise additional elements such as the signature (or other form of integrity control) of the credit parameters.

The IC card is set to display at least two credit parameters belonging to at least two distinct credit parameters records, and to select a credit parameters record comprising one of the displayed credit parameters. Typically, the cardholder views the credits available in the IC card, and chooses the most interesting one.

The IC card of the invention is advantageous in particular in that it contains credit parameters records enabling the cardholder to assess each credit and choose the credit based on credit parameters, which are self-sufficient criteria. The credit parameters records contain credit parameters which characterize the credit. For example a credit parameters record may contain the following information: 7% interest rate, starting from November 3^{rd} 2006, valid until December 31^{st} 2007. This is different from state of the art multi application credit cards which would merely send (typically to a POS terminal) static information such as an application label (for example "My_Bank credit application"), which is not self-sufficient, as it requires access to (or knowledge of) further information in order to characterize the credit.

The invention also relates to a display card according to claim 2 (respectively claim 3) and to an IC card as recited in claim 15 (respectively claim 16), which is similar to the display card of claim 2 (respectively claim 3), except that it does not necessarily have a display. Consequently, the IC card as recited in claim 15 (respectively claim 16) comprises a credit display interface in order to send at least two credit parameters to a terminal, the credit parameters belonging to at least two distinct credit parameters records of the IC card. The terminal displays the credit parameters sent by the IC card. The IC card also comprises a credit selection module which is a bit different from the credit selection module of the display card according to claim 2 (respectively claim 3), in that it receives instructions from the terminal instead of receiving them for example from an input device of the display card. The terminal may be in particular a standalone pocket IC card reader, which the user carries permanently.

Of course, a display card is an example of IC card, therefore the IC card of claims 15 and 16 may be a display card, in which case it has both a credit display interface and a credit display module, and it has both kinds of credit selection modules. This may be advantageous in order to manage the display card from a terminal display and terminal input device when a terminal is available. This is typically more comfortable than using the display and input device of a display card. The display card is managed from its own display and input device when there are no proper terminals around or when the cardholder prefers (e.g. for better data confidentiality).

A display card is typically more complex and expensive than a regular IC card having no display, no battery, no input device etc. On the other hand, a display card is more powerful since it allows some management of the credit parameters records without requiring a terminal.

Modulo the differences between claim 2 (respectively claim 3) and claim 15 (respectively claim 16), highlighted in the three previous paragraphs, and to minor specificities explained further in the description, the teaching of dependent claims 4 to 14 apply to the IC cards of claims 15 (respectively claim 16).

The invention also relates to a system comprising an IC card according to claim 1 and a terminal connectable with the IC card. In particular, the invention relates to a system comprising a display card according to claim 2 or 3 and a terminal, wherein upon connection of the display card with the terminal, and upon terminal request, the display card performs a credit transaction using the active credit parameters record of a credit application of the display card. The system is advantageous as it offers more flexibility. In particular it offers the possibility for the cardholder to easily select a credit. In preferred embodiments, the terminal is a regular terminal usable for credit transactions with state of the art credit cards. Such embodiments are therefore advantageous in that the cardholder has control over his credit card (the display card), although the issuer does not necessarily have control over the terminals of the acquirer.

As will be explained below, those terminals which are under control of the issuer (e.g. terminal belonging to the issuer, or complying with the technical requirements of the issuer, etc.) may offer more features to the cardholder than the regular terminals of other acquirers.

The invention also relates to a system comprising a first terminal, a second terminal, and an IC card according to claim 15 or 16. The first terminal comprises a credit display module and a credit selection interface.

Upon connection of the IC card with the first terminal, the first terminal credit display module, when actuated, requests the IC card credit display interface to send at least two credit parameters to the first terminal. The credit parameters that are sent belong to at least two distinct credit parameters records stored in the IC card. The first terminal credit display module displays the credit parameters sent to the first terminal on the first terminal. The first terminal credit selection interface is set to prompt the cardholder for a credit selection based on the displayed credit parameters. The first terminal credit selection interface requests the IC card credit selection module to select the credit parameters record which credit parameter(s) has(have) been selected on the terminal as the active credit parameters record of the credit application in which said credit parameters record is stored.

Upon connection of the IC card with the second terminal, and upon second terminal request, the IC card performs a credit transaction using the active credit parameters record of a credit application of the IC card.

The second terminal is typically a POS or an ATM.

The first and second terminals may be the same terminal. For example, both terminals can be a POS or an ATM belonging to the issuer, under control of the issuer. This is advantageous in that the same terminal can be used both for selecting a credit in the IC card and for performing a credit transaction using this credit, straightaway. However, this requires a certain control over the second terminal, which is not always possible.

The first terminal may be a standalone pocket IC card reader. A standalone pocket IC card reader can be defined as an IC card reader comprising at least a power supply (battery, solar cell, etc.), an output device (typically a display, but possibly another device such as a speaker for the visually impaired) and an input device (keypad, joystick, touch-sensitive screen, etc.). The three components above provide autonomy to the !C card reader, which is the meaning of the term standalone. A standalone pocket IC card reader fits in a pocket, as indicated by the term "pocket". The form factor of standalone pocket IC card readers is typically the form factor of the Reflex 370 product of Axalto (which is a smart card reader), or of the GemPocket® product of Gemplus (which is a smart card reader as well). Such first terminals are advantageous in that they are easy to carry by the cardholder, who can therefore select the credit he wishes to use at any time, even when he is about to perform a credit transaction using a terminal (e.g. a POS) which is not under the control of his issuer and which is not able to provide him with a credit selection feature. Advantageously, the standalone pocket IC card reader can work in connected mode, as the Xi-Sign 6000 product of Xiring®. A connected mode is defined as a mode in which the standalone pocket IC card reader can be connected with a network (directly or indirectly, through one or more intermediary devices). For example, a standalone pocket IC card reader may comprise a USB port for connecting to a PC which has an internet connection, or may have an Infrared (or Bluetooth) port for communicating with a cellular phone which can communicate through a cellular network. The standalone pocket IC card reader may consist of a cellular phone able to communicate with the IC card. For example, the cellular phone may have an IC card slot, or may support a contact-less IC card protocol for communicating with the IC card. Connected mode is advantageous as it enables a communication between the issuer and the IC card before the credit transaction.

The invention also relates to a method for performing a credit transaction with an IC card. The method comprises the following steps:
- a credit selection step wherein
   o a list of credits available in an IC card is displayed to the cardholder, each credit being represented by a set of credit parameters which characterize the credit,
   o the cardholder chooses a credit of his IC card,
   o the IC card selects the cardholder chosen credit as an IC card active credit
- a credit transaction step wherein
   o the cardholder connects the IC card with a terminal,
   o the terminal performs a credit transaction using an IC card active credit.

For example, let's consider a cardholder who is planning to buy a new home cinema TV set on credit. Let's assume that the cardholder has a display card according to claims 2 or 3, or an IC card according to claims 15 or 16, or an IC card according to claims 15 or 16 plus a terminal such as a standalone pocket IC card reader. In a first step, the cardholder checks which credits are available in his card on the display of the display card, or on the display of a terminal (such as a self-service kiosk in a local mall) connected with his IC card, or on the display of the standalone pocket IC card reader. For example, the cardholder may notice that he can spend up to 2000 dollars with an interest rate of 3,1% with a credit entitled "discount offer" or 5000 dollars with an interest of 5% with a credit entitled "furniture credit". The cardholder may then choose to select the "furniture credit", because he is interested in buying a 3000 dollars set and considers that the "furniture credit" seems to be a reasonable offer.

In a second step, the cardholder may perform the credit transaction, e.g. buy the home cinema TV set using his card in the POS of the shop, which uses the pre-selected "furniture credit". Thanks to the method of the invention, the cardholder therefore managed to buy the desired product at better conditions, the shop managed to sell a product, and the issuer managed to "sell" another credit to the cardholder. Without the method of the invention, the cardholder might have been stuck with the single credit of his credit card. Possibly, this single credit wouldn't have been satisfactory, and the cardholder wouldn't have made the purchase.

The invention and its advantages will be explained more in details in the following specification referring to the appended drawings, in which Figure 1 shows a preferred display card and a preferred IC card according to the invention, cooperating with a terminal, Figure 2 shows the architecture of a preferred display card, Figure 3 shows an example of set of credit parameters records of a display card according to the invention.

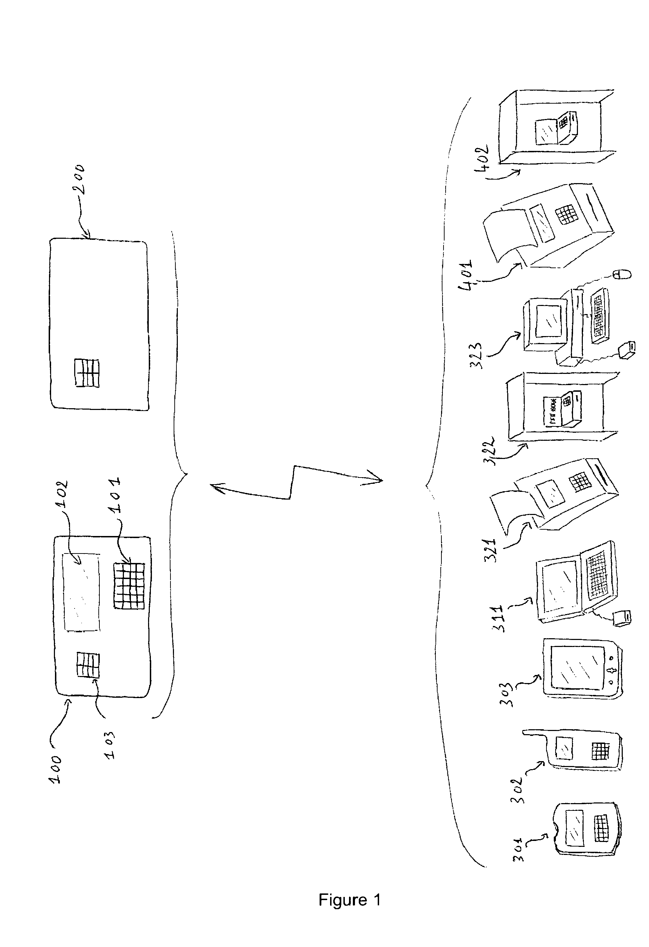

Figure 1 depicts an example of display card 100, namely a smart card equipped with an input device 101 (typically a keypad), a display 102, and a chip (or IC) 103. The display card 100 is connectable with a terminal 301-303, 311, 321-323, 401-402. The connection between the display card 100 and the terminal can be a contact connection, for example a USB connection, an Ethernet connection, an ISO 7816 connection, an MMC connection. The connection can also be a contact-less connection, such as a radio connection (for example ISO 14443, Bluetooth, etc.).

Terminals 301, 302 and 303 are respectively a standalone pocket smart card reader 301, a cell phone 302 able to communicate with the display card 100 (e.g. cell phone with an external smart card slot or with contact-less capability, in case the display card 100 has a contact-less chip), and a PDA 303 able to communicate with the display card 100. Terminals 301, 302 and 303 are typically carried by the cardholder permanently, and comprise means to access the functions of the display card 100 (e.g. such means can consist of issuer software downloaded into the terminal, which presupposes that the terminals offer the possibility to download and install such software). Terminals 301, 302 and 303 are therefore both under the cardholder and the issuer control. Issuer software may be software compliant with a standard endorsed by the issuer, in which case the issuer software may be provided by an entity having no relationship with the issuer. Terminals 301, 302 and 303 are normally more useful with IC cards 200 which have no display and no input device. However, terminals 301, 302 and 303 may be useful with display cards 100 as well because they may be able to establish a communication between the display card 100 and the issuer by connecting them through a network, which a display card 100 is typically unable to perform alone.

Terminal 311 is a laptop computer belonging to the cardholder. Terminal 311 is also both under the control of the cardholder and of the issuer. However, the cardholder does not necessarily carry the terminal 311 permanently. The terminal 311 typically stays in a place (e.g. cardholder home), or may move from place to place (e.g. between home and office), but does not typically accompany the cardholder at all time. The terminal 311 can comprise means for performing credit transactions (e.g. online banking, e-commerce) with the display card 100.

Terminals 321, 322 and 323 are respectively a POS terminal 321, an ATM 322 and a desktop computer 323, and are under issuer control. For example, the POS 321 may be a POS rented by the issuer to a shop. The ATM 322 may be an ATM of the issuer network in which cardholders can withdraw cash. The desktop computer 323 may be a computer located in a branch office of the issuer. Terminals 321-323 are typically usable for performing credit transactions.

Terminals 401 and 402 are for example a POS 401 and an ATM 402. Terminals 401 and 402 are usable for credit transactions involving the display card, however they are under the control of an acquirer distinct from the issuer of the display card. Unless the acquirer-controlled terminals 401 and 402 conform to the technical specifications required by the issuer of the display card 100, some terminal features described below may be unavailable with terminals 401 and 402.

In a possible embodiment (covered by claim 2), the display card 100 comprises at least one credit application. At least one credit application of the display card 100 stores at least two credit parameters records. In this embodiment, the cardholder does not necessarily have to select a particular credit application, as it is possible to have only one credit application in the display card 100 and still be able to select between different credits, each credit being associated with a distinct credit parameters record included in the credit application. Contrary to state of the art credit cards comprising several credit applications, the display card 100 of this embodiment is advantageous in particular in that it does not necessarily have to rely on the availability of terminals features for selecting one of the credit applications, or of a display card feature for selecting a credit application.

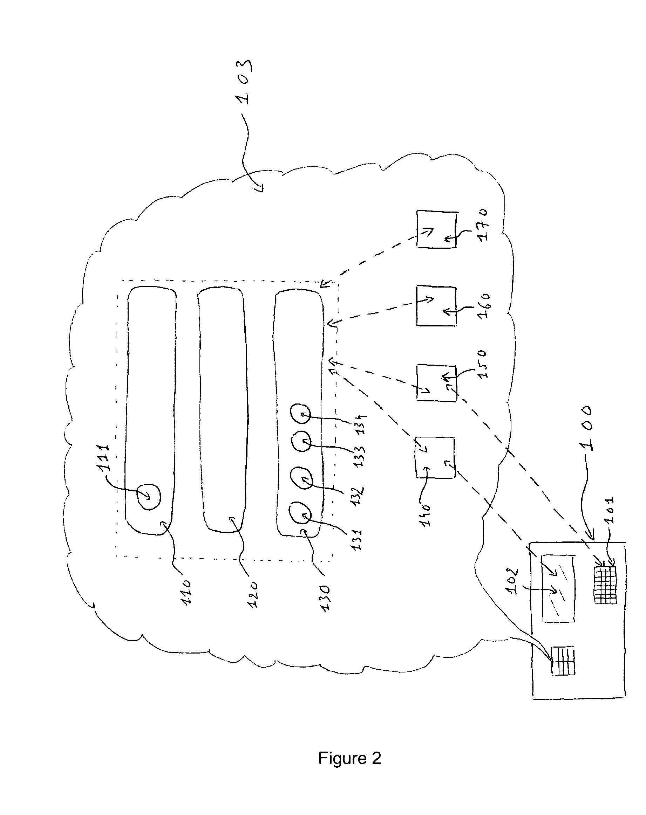

In another embodiment (covered by claim 3 and detailed further below), the display card 100 comprises at least two credit applications 110, 120, 130 shown on Figure 2, for example a domestic payment scheme application, an international payment scheme application, etc. At least two credit applications 110, 130 of the display card 100 comprise a credit parameters record.

The display card 100 according to this other embodiment can contain multiple credit applications, each credit application containing a single credit parameters record. The display card 100 can also contain multiple credit applications, at least one of the credit applications containing more than one credit parameters records, in which case the display card 100 offers a double selection level (a credit application selection, and optionally, for each credit application, a credit parameters record selection). Not all credit applications of the display card necessarily belong to the same issuer, in which case it may be preferable to associate each credit application with a key material specific to the corresponding issuer.

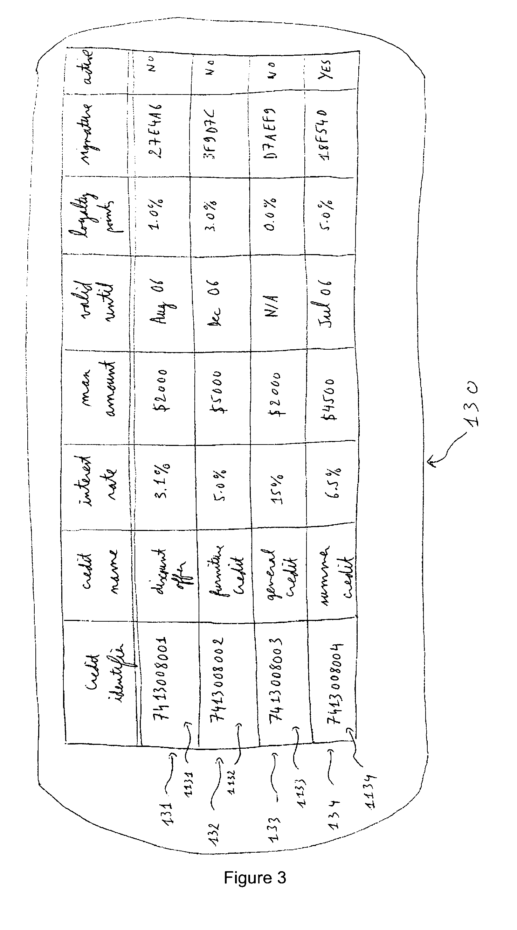

On the example depicted on Figure 2, the credit application 110 comprises one credit parameters record 111, while the credit application 130 comprises four credit parameters records 131, 132, 133, 134 which contents are detailed on Figure 3. The display card 100 comprises a credit display module 140, a credit selection module 150 and an applications catalog module 160.

The credit display module 140 lists at least two credit parameters records of the display card 100, listing a credit parameters record being defined as displaying at least one credit parameter stored in said credit parameters record on the display 102 of the display card 100. Not all credit parameters of a credit parameters record have to be displayed. Some credit parameters might be of minor interest to the cardholder, who may configure the display card 100 so that it does not display such credit parameters. According to a preferred embodiment, a cardholder may chose to display only the credit parameters which are important for the cardholder to characterize a credit associated with a credit parameters record and decide which one is the most interesting in a given situation. If there are two many credit parameters records to display, i.e. if all credit parameters records do no fit on the display 102, it is possible to scroll through the credit parameters records using for example arrow keys of the input device.

The credit selection module 150 selects, as instructed by the input device 101, one of the listed credit parameters records as the active credit parameters record of the credit application in which said credit parameters record is stored. The active credit parameters record of a credit application is defined as the credit parameters record accessed by a terminal when the terminal requires access to a credit parameters record of a credit application without specifying to which of the credit parameters records of the credit application the terminal requires access. Therefore a credit application of the display card 100 may appear to the terminal as a regular credit application associated with a single credit, while in reality the credit application is associated with multiple credits, each credit being represented by a credit parameters record, one of the credits being selected in advance as the active credit, thanks to the keypad or other input device.

The active credit parameters record may remain active until the credit selection module selects another credit parameters record as the active credit parameters record. Alternatively, the active credit parameters record may remain active only for the next X times a terminal requires access to a credit parameters record. In this alternative embodiment, once the active credit parameters record has been accessed by a terminal X times (e.g. X=1), it may cease to be the active credit parameters record. In such case, either there is no active credit parameters record any more (until one is selected), or a default credit parameters record may be automatically selected as the active credit parameters record. Other alternatives can be devised, for example the active credit parameters record may remain active during a certain period of time (e.g. one hour) after it has been selected. After the specified delay has lapsed, a default credit parameters record may automatically become the active credit parameters record, or there may be no active credit parameters record.

In the example of Figure 3, the credit parameters record 134 representing a summer credit has been selected as the active credit parameters record of the credit application 130.

The credit selection module 150 also selects the credit application containing the active credit parameters record (credit application 130 in this example) as the active credit application. Alternatively, the credit selection module 150 may permit the selection of the active credit parameters record for each credit application, and may permit the independent selection of the active credit application. In such case, the credit selection module 150 may refuse to select a credit application as the active credit application if no active credit parameters record has been specified for this credit application, or may specify a default active credit parameters record for each credit application, when this is possible.

The display card 100 may comprise applications other than credit applications (such as debit applications, electronic purse applications, etc.), or even applications not related to finance such as cellular telephony applications or computer security applications. Such other applications may comprise service parameters records enabling the selection of one out of many services, in a manner similar to the selection of one out of many credits in the case of a credit application according to the invention.

The display card 100 is advantageous, in particular due to the fact that it allows a cardholder to select, just before making a purchase (credit transaction), which credit to use for that purchase, even though the terminal used for the credit transaction does not necessarily support credit selection. This is much more convenient than state of the art solutions such as those in which a cardholder has different credit cards, each of these credit cards offering a different type of credit. The cardholder does no longer need to deliberately insert one of his credit cards inside the terminal depending on the type of credit he expects, typically the interest rate and/or loyalty points that each of these credit cards offers. The cardholder therefore no longer needs to remember the credit parameters associated with each of his credit cards, or to carry a sheet of printed paper listing those credit parameters for each of his credit cards.

The applications catalog module 160 reports to a terminal 301-303, 311, or 321-323, upon query of the terminal 301-303, 311, or 321-323, at least one of the credit applications available in the display card. This may work with terminals 401-402 as well if they conform to a relevant specification (i.e. if they are able to communicate with the applications catalog module in the required manner).

The active credit application is defined as the only credit application reported by the applications catalog module 160 as an active credit application.

Reporting a credit application as an active credit application may consist in the active credit application being the first (and optionally the only) credit application reported by the applications catalog module 160. As will be explained more in details below, it may also consists in including a tag in each reported credit application, the tag being set to a predefined value for the active credit application and to different values for all other credit applications, if any.

The display card 100 is advantageous in that it offers a mechanism for facilitating the selection of a specific credit application by a terminal. Many terminals already rely on an applications catalog module for listing all applications of an IC card with which they establish a communication. For example, an application catalog module for EMV cards is described in EMV 4.1 book 1, chapter 12.3 ("Building the Candidate List"), page 135.

By modifying the applications catalog module in order that it reports only the active credit application instead of all credit applications, it is possible to select the active credit application without changing the terminal. The active credit application is then the only credit application reported by the applications catalog module 160. In the case of EMV 4.1, this may introduce a non-compliance with the EMV standard (which states that all applications shall be reported, or "located" in EMV language). The EMV standard does not address the above-mentioned technical problem. However, there is no interoperability issue, and the embodiment works well in an EMV environment despite the potential EMV non-compliance, since the fact that not all applications are reported is deliberate (it's a cardholder choice). EMV and other standards aim at solving interoperability issues by standardizing terminals and cards, and specifying a maximum number of features, but this approach takes a lot of time. Indeed, the installed base of cards and terminals is very important - there are millions of cards and terminals on the field. Therefore there is a strong inertia when it comes to changing a standard, and even when a new standard is agreed upon, it can take years before the new standard is fully implemented.

Alternatively, it is possible to list the active credit application in first position, which is especially advantageous for those terminals which automatically pick the first available credit application reported by an applications catalog module. The active credit application is then the first credit application reported by the applications catalog module 160.

In a variant of the embodiment, a tag is included in each reported credit application, the tag being set to a predefined value for the active credit application and to different values for all other credit applications, if any. For example, the tag can be a flag (such as TRUE or 1 for the active credit application, and FALSE or 0 for all other credit applications), or a label ("ACTIVE" / "NOT ACTIVE"), etc. Including a tag may offer a greater flexibility but may require modifications in the terminal. However this embodiment is not easy to implement with the EMV standard (as it may introduce non-compliances with the standard and interoperability issues), therefore it would be better used in future or alternative standards taking this constraint into account.

In the case of EMV display cards, and for those credit applications which are associated with only one credit, it may be hard to store credit parameters in the EMV application label of the credit application, i.e. to use the application label as a credit parameters record, or at least as part of the credit parameters record. This would allow an EMV compliant terminal to display the credit parameters without requiring any software change. However, the credit parameters are typically not short enough to fit in the application label, which is limited in size (16 bytes) and is therefore typically not able to contain enough credit parameters. In addition, the application label is often imposed therefore it is not always possible to use it. In general it is not practical to store the credit parameters in the AID of the application, since AIDs are typically formatted according to strict rules and since their value is often imposed. !n addition, AIDs are typically registered, which may render their modification cumbersome (difficult to update credit parameters).

In preferred embodiments, the credit display module 140 is set to operate in at least one of the seven following modes (a, b, c, d, e, f, g), wherein each mode is actuated by the input device 101. For example, each mode may be associated with a distinct key of a keypad, such as a key labeled "view all credits" for the first mode, etc.

In a first mode a), the credit display module 140 lists all credit parameters records stored in the display card 100.

In a second mode b), the credit display module 140 lists a subset of the credit parameters records stored in the display card 100. The subset of records may be specified with the input device 101 during the first mode a). Specifying the subset may consist in selecting the records to display. It may also consist in selecting the records not to display. For example, the cardholder may invoke the first mode, and select a number of credit parameters records which he's not interested in. He can then press a key labeled "discard selected credit(s)" (or click a menu item entitled "discard selected credit(s)"). This second mode b) displays pre-filtered credit parameters records. This allows to no longer display credit parameters records which the cardholder considers uninteresting irrespective of the credit transaction he's likely to execute. Of course, it may be possible at a later stage to come back to the first mode (e.g. by pressing the relevant key) and to specify a different subset.

In a third mode c), the credit display module 140 lists the credit parameters records for which a parameter has a value V, wherein the value V and the parameter are specified with the input device 101. Specifying a parameter should be understood as specifying the type of parameter which should be sought (e.g. "interest rate", or "valid until"). For example, the cardholder may wish to display all credit parameters records for which the interest rate is 0%. To this end, the cardholder may enter the value "0%", and select the parameter "interest rate". If the specified value alone defines unambiguously which parameter is sought, the parameter selection step may be omitted. For example, if among all credit parameters records stored in the display card there is only one credit parameter which can contain a percentage value, entering the value "0%" may implicitly indicate that the specified credit parameter is this credit parameter. As explained earlier in the description, the period of low interest (or 0%) credits is typically limited to a fixed term, usually between 6 and 12 months, therefore the credit parameters records displayed in this example of third mode typically vary over time. Alternatively, the cardholder may first specify a credit parameter (e.g. from a drop down list), and the input of the value may be simplified based on the specified credit parameter. For example, the simplified input may be based on the values stored in the display card 100 for the specified credit parameter. In the example of Figure 3, four maximum amounts are stored in the credit application 130. Assuming that there is no maximum amount parameter in the credit parameters record 111 of credit application 110, the only maximum amounts values which the cardholder should be allowed to type (in order to have at least one matching credit parameters record) are the four values shown on Figure 3, namely $2000, $5000, and $4500 (only three values are given since the value $2000 appears in two different records, record 131 and record 133). When there are less than a predefined number of possible values (e.g. less than five possible values), the display card may be programmed to automatically display a drop-down list containing all possible values, which permits to quickly select the value instead of having to type it entirely.

In a fourth mode d), the credit display module 140 lists the credit parameters records for which a parameter belongs to a range of values R, wherein the range of values R and the parameter are specified with the input device. The fourth mode is similar to the third mode, except that typically two values need to be entered (in order to specify the range of values, a min and a max may be specified). The fourth mode is useful primarily for parameters containing a numeric value. Other types of parameters may be sorted (e.g. text labels can be sorted by alphabetic order), but it is usually less useful. For example, the cardholder may request only the credit parameters records which contain a loyalty bonus parameter, and which loyalty bonus parameter value is comprised between 2% and 3.5% to be displayed. He may request only those credit parameters records which loyalty bonus parameter is greater than 2% to be displayed, by entering only the minimum parameter value 2%, or by entering the minimum parameter value 2% and entering a very high maximum parameter value (e.g. 99%). The first option is preferable as it is simpler and more intuitive.

In a fifth mode e), the credit display module lists the credit parameters records for which N parameters respectively have values V₁ ...Vᵢ and belong to ranges of values Rᵢ₊₁...R_{N}, wherein the values V₁...Vᵢ, the ranges of values Rᵢ₊₁...R_{N} and the N parameters are specified with the input device. The fifth mode is a combination of third and fourth modes, consisting in specifying the value (or the range of values) of several parameters. This can be useful in particular if there are plenty of credit parameters records in the display card 100 and if the cardholder needs elaborate search criteria in order to display only a limited number of credit parameters records, which best match his expectations.

In a sixth mode f) the credit display module 140 lists only the credit parameters records for which the credit parameters satisfy a property specified with the input device 101. For example, the cardholder can type an amount (e.g. $1400), a maximum monthly payment amount (e.g. $280) and a maximum duration (e.g. 7 months). The display card 100 can then determine, based on the credit parameters of each credit parameters record, which credits allow the cardholder to spend $1400 with a monthly payment and a duration lower than the specified maxima. The credit display module 140 lists only the credit parameters records corresponding to a credit satisfying the specified property. Optionally, the credit parameters records are displayed only if they not only match the specified property but also belong to the subset of credit parameters records defined in the second mode b).

In a seventh mode g) the credit display module 140 lists the credit parameters records in an order determined by a set of criteria specified with the input device 101. For example, the cardholder can type an amount (e.g. $1400) and a monthly payment (e.g. $280), and select "duration" as the sorting variable. The display card 100 then sorts the credit parameters records according to the duration of the credit corresponding to this $1400 amount and this $280 monthly payment. The credit parameters record corresponding to the shortest credit is displayed first, then the other credit parameters records follow, until the longest credit is reached. The credits can also be sorted in reverse order (longest credit first). If a credit associated with a credit parameters record does not accept the set of criteria, the corresponding credit parameters record is not displayed. For example, if the monthly payment typed with the input device is lower than the monthly interest associated with a given credit (based on the amount that was input), the credit parameters record associated with this credit is not displayed. Advantageously, the sorting variable (which is the credit duration in the present example) computed for each credit is displayed next to the corresponding credit parameters record. Optionally, the credit parameters records which do not belong to the subset defined in the second mode b) are not displayed.

In a variant of this embodiment, an IC card 200 replaces the display card 100. The IC card 200 relies on the display and input device of a terminal instead of relying on an embedded display 102 and input device 101. This terminal is preferably a terminal controlled by the issuer and carried by the cardholder (such as terminals 301-303). This terminal may be a terminal 311 or terminals 321-323 controlled by the issuer but not permanently carried by the cardholder. This terminal may also be a terminal 401-402 not controlled by the issuer provided the terminal 401-402 has the required features (it must conform to the specification needed to access the functions of the IC card 200). The IC card 200 contains a credit display interface similar to the aforementioned credit display module 140, except that it sends the credit parameters to the terminal 301-303, 311, 321-323, 401-402 instead of displaying them on a display of the IC card 200. The IC card 200 contains a credit selection module similar to the aforementioned credit selection module 150 except that it receives instructions from the terminal 301-303, 311, 321-323, 401-402 instead of an input device of the IC card 200.

According to a preferred embodiment, the aforementioned display card 100 comprises a credit parameters update module 170. The credit parameters update module 170 is set to update at least one credit parameter of a credit parameters record of the display card 100. For example, the credit parameters of a credit parameters record may include a usage frequency dependent parameter. Usage frequency is linked to how often the cardholder uses the credit associated with the credit parameters record. Usage frequency may be monitored through a counter incremented each time the credit parameters record is used in a credit transaction. Frequent users may be offered a lower (or on the contrary a higher) interest rate, depending on whether repeated use of this credit is encouraged or discouraged by the issuer. Therefore, the credit parameters update module 170 may be used in order to update the frequency dependent parameters such as for example the interest rate parameter, when the cardholder qualifies as a frequent user for whom the interest rate shall be modified according to a given formula.

The credit parameters update module 170 may be set to update at least one credit parameter of a credit parameters record of the display card 100 with a new credit parameter received from a terminal, in particular from a terminal 301-303, 311, or 321-323. For example, each time the cardholder inserts his display card 100 into (or otherwise connects his display card 100 with) a terminal 301-303, 311, 321-323, which is under control of the issuer, the issuer may update credit parameters records according to his latest offers, reflecting the evolution of interest rates or other factors. Thanks to this characteristic, the display card 100 contains the latest versions of credit parameters records. In order to benefit from terminals 301 and 303 in this context, the terminals shall implicitly be able to operate in connected mode (i.e. they shall support connection to a network in order to establish a communication with the issuer). The connected mode may rely on another device. For example, a terminal 303 consisting of a PDA may lack direct network connectivity, but may have indirect network connectivity through a personal computer. For example, during each synchronization of the PDA 303 with the personal computer of the PDA 303 owner (who is typically the cardholder), new credit parameters may be loaded into the PDA 303, which may then update the display card 100 the next time it is connected with the PDA 303.

The credit parameters update module 170 may be set to create at least one new credit parameters record, and to initialize it with initialization data received from a terminal, typically a terminal 301-303, 311, or 321-323 offering a connected mode. For example, when a new credit offer is launched by the issuer, the issuer can load a corresponding credit parameters record into every display card connecting to one of the terminals 301-303, 311, 321-323 which the issuer controls. The new credit parameters record may be added into an existing credit application, or a new credit application may be loaded in order to host the new credit parameters record. Since the competition is typically very active among issuers, issuers try to constantly update their offer with more attractive credits. The proposed credit update module 170 permits to update the offer without reissuing the card. For example, the card may be loaded with a credit parameters record 134 corresponding to a more attractive credit offer called "summer credit" which allows to spend up to $4500 with an interest rate of 6.5% and with an extremely aggressive loyalty point policy. This offer may be limited to a short summer period. Up to now, marketing documents are typically mailed to the cardholder in order to stress the fact that a new credit offer is available. With the invention, such mailing may be used in order to reinforce the cardholder awareness of the issuer credit offer, but is no longer as important.

The credit parameters update module 170 may also be set to delete at least one credit parameter from a credit parameters record of the display card 100. For example, the loyalty bonus parameter for a given credit may be deleted due to the fact that the credit associated with this credit parameters record no longer offers a loyalty bonus. The deletion can be triggered for example from an issuer-controlled terminal 301-303, 311, 321-323, or from the display card itself. The deletion can also encompass the whole credit parameters record. For example, the display card 100 may comprise an internal clock and date system which may be used to monitor which credit parameters records are no longer valid due to the fact that the associated credit expired. This can be achieved by comparing the "valid until" credit parameter (when such parameter exists) with the current date. The corresponding credit parameters records can be deleted accordingly, without requiring any intervention of the issuer.

The issuer-controlled terminal (for example a POS 321 or an ATM 322) can invoke the credit parameters update module 170 for example by means of scripts (e.g. EMV issuer scripts) or proprietary commands.

The above described credit parameters update module can be implemented in a similar manner in an IC card 200 as described earlier. However, an IC card 200 typically does not comprise an embedded power supply, and consequently it does not necessarily have a date and time system, in which case the above example dealing with an internal clock and date system is not directly applicable, and would require a modification. For example the date shall be passed from a terminal to the IC card 200. In some situations such modification might be complex as the terminal does not necessarily support this date passing feature.

According to a preferred embodiment which details are shown on Figure 3, a credit parameters record 131, 132, 133, 134 of the display card 100 may be associated with a credit identifier 1131, 1132, 1133, 1134. The credit identifier 1131, 1132, 1133, 1134 may be stored in the credit parameters record 131, 132, 133, 134. In particular, the stored credit identifier 1131, 1132, 1133, 1134 may comprise a serial number identifying the credit parameters record, as shown on Figure 3 (the serial number 7413008001 identifies the first credit parameters record, 7413008002 identifies the second, 7413008003 the third and 7413008004 the fourth). The credit identifier may also be computed from a set of parameters stored in the credit parameters record. For example, the credit identifier may be computed using a one-way function such as the well known SHA-1 or MD5 hashing functions. This is advantageous as the credit identifier is then strongly linked to the credit parameters, due to the mathematical properties of one-way functions. Consequently, the probability of having two distinct credit parameters records with the same credit identifier is close to zero, and there is no storage requirement in the display card for the credit identifiers, which may be recalculated from the credit parameters anytime they are needed.

The above described credit identifier can be used in an IC card 200 as well.

According to a preferred embodiment, the display card 100 is compliant with the EMV standard, which is a prevalent standard in the field of financial cards.

In an EMV display card 100, credit applications are preferably stored in the form of an ADF.

It is advantageous for the EMV display card 100 to output at least one credit parameter of a credit parameters record inside the EMV issuer application data field when the EMV display card 100 executes an EMV Generate_AC command involving said credit parameters record. The credit parameter(s) which is (are) output are preferably sufficient for identifying the credit parameters record, that is the associated credit.

It is advantageous for the EMV display card 100 to output the credit identifier associated with a credit parameters record inside the EMV issuer application data field when the EMV display card 100 executes an EMV Generate_AC command involving said credit parameters record. Indeed, the credit identifier identifies the credit.

The Generate_AC command is specified in EMV and stands for "generate application cryptogram". According to EMV, the Generate_AC command sends transaction-related data to the IC card, which computes and returns a cryptogram. The Generate_AC command can optionally output an issuer application data IAD which is a 32 byte field. The IAD can contain an IDD (issuer discretionary data). It may be advantageous to use the IDD part of the IAD for outputting the credit identifier and/or credit parameter(s). The IDD is typically reserved for the issuer. Outputting information enabling the identification of the credit parameters record (and consequently the identification of the credit associated with the credit parameters record), inside the IDD is extremely advantageous. Indeed, it does not require any modification of the acquirer terminals (POS etc.), nor of the network, architecture. For example, the EMV display card 100 may output the credit identifier of the credit parameters record in the IDD. A regular POS 401 automatically forwards the IDD to the issuer, who can determine which credit was selected by the cardholder and how to process the credit transaction. This is possible although the acquirer and the acquirer terminals 401, 402 did not participate in the credit selection, and were not even aware that a credit selection process took place.

In certain environments, it may be beneficial to output both a credit identifier which uniquely identifies the credit, and a set of credit parameters. For example, if the display card 100 has updated the credit parameters automatically in a manner described earlier, it might be beneficial for the issuer to validate that the new credit parameters computed by the display card 100 are the same as the new credit parameters computed by the issuer servers. Obviously, in such environments, the credit identifier should not be computed with a one-way function applied to some credit parameters. There are however other situations in which outputting both some credit parameters and a credit identifier computed with a one-way function applied to some credit parameters may be beneficial. This may be useful for example as a credit parameters integrity check. Indeed, by recalculating the one-way function based on the credit parameters and comparing it with the credit identifier, the issuer can check the consistency of the information.

It is possible for an IC card 200 to be an EMV IC card 200 and to incorporate the EMV features recited above. Such IC card 200 can typically be an ISO 7816 bankcard.

## Claims

1. IC card (100, 200) **characterized in that** it comprises at least two credit parameters records (111, 131, 132, 133, 134), each credit parameters record comprising at least one credit parameter, the IC card (100, 200) being set to display at least two credit parameters belonging to at least two distinct credit parameters records (111, 131, 132, 133, 134), and to select a credit parameters record comprising one of the displayed credit parameters.

2. IC card (100) according to claim 1, the IC card being a display card (100), the display card (100) comprising at least one credit application, at least one credit application of the display card (100) storing at least two credit parameters records, the display card (100) comprising a credit display module (140) and a credit selection module (150), wherein
a. the credit display module (140) lists at least two credit parameters records of the display card (100),
b. the credit selection module (150) selects one of the listed credit parameters records as the active credit parameters record of the credit application in which said credit parameters record is stored, the active credit parameters record of a credit application being defined as the credit parameters record accessed by a terminal (301-303, 311, 321-323, 401-402) when the terminal (301-303, 311, 321-323, 401-402) requires access to a credit parameters record of a credit application without specifying to which of the credit parameters records of the credit application the terminal (301-303, 311, 321-323, 401-402) requires access.

3. IC card (100) according to claim 1, the IC card being a display card (100), the display card (100) comprising at least two credit applications, at least two credit applications of the display card (100) comprising a credit parameters record, the display card (100) comprising a credit display module (140), a credit selection module (150) and an applications catalog module (160), wherein
a. the credit display module (140) lists at least two credit parameters records of the display card (100),
b. the credit selection module (150) selects,
i. one of the listed credit parameters records as the active credit parameters record of the credit application in which said credit parameters record is stored,
ii. the credit application containing the active credit parameters record as the active credit application,
c. the applications catalog module (160) reports to a terminal (301-303, 311, 321-323, 401-402) at least one of the credit applications available in the display card (100),
the active credit parameters record of a credit application being defined as the credit parameters record accessed by a terminal (301-303, 311, 321-323, 401-402) when the terminal (301-303, 311, 321-323, 401-402) requires access to a credit parameters record of a credit application without specifying to which of the credit parameters records of the credit application the terminal (301-303, 311, 321-323, 401-402) requires access, the active credit application being defined as the only credit application reported by the applications catalog module (160) as an active credit application.

4. Display card (100) according to claim 3, wherein reporting a credit application as an active credit application consists in the active credit application being the first credit application reported by the applications catalog module (160).

5. Display card (100) according to claim 3, wherein reporting a credit application as an active credit application consists in including a tag in each reported credit application, the tag being set to a predefined value for the active credit application and to different values for all other credit applications, if any.

6. Display card (100) according to any previous claim, the display card comprising an input device (101), wherein the credit display module (140) is set to operate in at least one of the following modes, wherein each mode is actuated by the input device (101):
a. a first mode in which the credit display module (140) lists all credit parameters records stored in the display card (100),
b. a second mode in which the credit display module (140) lists a subset of the credit parameters records stored in the display card (100), wherein said subset of records is specified with the input device (101) during the first mode,
c. a third mode in which the credit display module (140) lists the credit parameters records for which a parameter has a value V, wherein the value V and the parameter are specified with the input device (101),
d. a fourth mode in which the credit display module (140) lists the credit parameters records for which a parameter belongs to a range of values R, wherein the range of values R and the parameter are specified with the input device (101),
e. a fifth mode in which the credit display module (140) lists the credit parameters records for which N parameters respectively have values V₁...Vᵢ and belong to ranges of values Rᵢ₊₁...R_{N}, wherein the values V₁...Vᵢ, the ranges of values Rᵢ₊₁...R_{N} and the N parameters are specified with the input device (101),
f. a sixth mode in which the credit display module (140) lists only the credit parameters records for which the credit parameters satisfy a property specified with the input device (101).
g. a seventh mode in which the credit display module (140) lists the credit parameters records in an order determined by a set of criteria specified with the input device (101).

7. Display card (100) according to any previous claim, the display card (100) comprising a credit parameters update module (170), wherein the credit parameters update module (170) is set to update at least one credit parameter of a credit parameters record of the display card (100).

8. Display card (100) according to claim 7, wherein the credit parameters update module (170) is set to update at least one credit parameter of a credit parameters record of the display card (100) with a new credit parameter received from a terminal (301-303, 311, 321-323).

9. Display card (100) according to any previous claim, wherein a credit parameters record is associated with a credit identifier.

10. Display card (100) according to claim 9, wherein the credit identifier is stored in the credit parameters record.

11. Display card (100) according to claim 9, wherein the credit identifier is computed from a set of parameters stored in the credit parameters record.

12. Display card (100) according to any previous claim, the display card (100) being compliant with the EMV standard.

13. Display card (100) according to claim 12, wherein at least one credit parameter of a credit parameters record is output by the display card (100) inside the EMV issuer application data field when the display card (100) executes an EMV Generate_AC command involving said credit parameters record.

14. Display card (100) according to claim 12 or 13, wherein the credit identifier associated with a credit parameters record is output by the display card (100) inside the EMV issuer application data field when the display card (100) executes an EMV Generate_AC command involving said credit parameters record.

15. IC card (200) according to claim 1, the IC card (200) comprising at least one credit application, at least one credit application of the IC card (200) storing at least two credit parameters records, the IC card (200) comprising a credit display interface and a credit selection module, wherein
a. the credit display interface sends at least two credit parameters to a terminal (301-303, 311, 321-323), said credit parameters belonging to at least two distinct credit parameters records of the IC card (200),
b. the credit selection module selects, as instructed by the terminal (301-303, 311, 321-323), one of the credit parameters records which credit parameters have been sent to the terminal (301-303, 311, 321-323) by the credit display interface as the active credit parameters record of the credit application in which said credit parameters record is stored, the active credit parameters record of a credit application being defined as the credit parameters record accessed by a terminal (301-303, 311, 321-323, 401-402) when the terminal (301-303, 311, 321-323, 401-402) requires access to a credit parameters record of a credit application without specifying to which of the credit parameters records of the credit application the terminal (301-303, 311, 321-323, 401-402) requires access.

16. IC card (200) according to claim 1, the IC card (200) comprising at least two credit applications, at least two credit applications of the IC card (200) comprising a credit parameters record, the IC card (200) comprising a credit display interface, a credit selection module and an applications catalog module, wherein
a. the credit display interface sends at least two credit parameters to a terminal (301-303, 311, 321-323), said credit parameters belonging to at least two distinct credit parameters records of the IC card (200),
b. the credit selection module selects, as instructed by the terminal (301-303, 311, 321-323),
i. one of the credit parameters records which credit parameters have been sent to the terminal by the credit display interface as the active credit parameters record of the credit application in which said credit parameters record is stored,
ii. the credit application containing the active credit parameters record as the active credit application,
c. the applications catalog module reports to a terminal (301-303, 311, 321-323, 401-402) at least one of the credit applications available in the IC card (200),
the active credit parameters record of a credit application being defined as the credit parameters record accessed by a terminal (301-303, 311, 321-323, 401-402) when the terminal (301-303, 311, 321-323, 401-402) requires access to a credit parameters record of a credit application without specifying to which of the credit parameters records of the credit application the terminal (301-303, 311, 321-323, 401-402) requires access, the active credit application being defined as the only credit application reported by the applications catalog module as an active credit application.

17. System comprising an IC card (100, 200) according to claim 1 and a terminal connectable with said IC card.

18. System according to claim 17, comprising a display card (100) according to claim 2 or 3 and a terminal (302, 311, 321-323, 401-402), wherein upon connection of the display card (100) with the terminal (302, 311, 321-323, 401-402), and upon terminal (302, 311, 321-323, 401-402) request, the display card (100) performs a credit transaction using the active credit parameters record of a credit application of the display card (100).

19. System according to claim 17, comprising a first terminal (301-303, 311, 321-323), a second terminal (302, 311, 321-323, 401-402), and an IC card (200) according to claim 15 or 16, the first terminal (301-303, 311, 321-323) comprising a credit display module and a credit selection interface, wherein upon connection of the IC card (200) with the first terminal (301-303, 311, 321-323),
a. the first terminal (301-303, 311, 321-323) credit display module requests the IC card (200) credit display interface to send at least two credit parameters to the first terminal (301-303, 311, 321-323), said credit parameters belonging to at least two distinct credit parameters records stored in the IC card (200), and displays said credit parameters on the first terminal (301-303, 311, 321-323),
b. the first terminal (301-303, 311, 321-323) credit selection interface is set to prompt the IC card (200) holder for a credit selection based on the displayed credit parameters, and to request the IC card (200) credit selection module to select the credit parameters record which credit parameter(s) has(have) been selected on the terminal (301-303, 311, 321-323) as the active credit parameters record of the credit application in which said credit parameters record is stored,
and wherein upon connection of the IC card (200) with the second terminal (302, 311, 321-323, 401-402), and upon second terminal (302, 311, 321-323, 401-402) request, the IC card (200) performs a credit transaction using the active credit parameters record of a credit application of the IC card (200).

20. System according to claim 19, wherein the first and second terminals are the same terminal (302, 311, 321-323).

21. Method for performing a credit transaction with an IC card (100, 200), **characterized in that** it comprises the following steps:
a. a credit selection step wherein
i. a list of credits available in an IC card (100, 200) is displayed to the cardholder, each credit being represented by a set of credit parameters which characterize the credit,
ii. the cardholder chooses a credit of his IC card (100, 200),
iii. the IC card (100, 200) selects the cardholder chosen credit as an IC card (100, 200) active credit
b. a credit transaction step wherein
i. the cardholder connects the IC card (100, 200) with a terminal (302, 311, 321-323, 401-402),
ii. the terminal (302, 311, 321-323, 401-402) performs a credit transaction using an IC card (100, 200) active credit.
